# EUROPEAN PATENT SPECIFICATION

(11) **EP 0 933 954 B1**
(45) Date of publication and mention of the grant of the patent: **15.06.2005**
(21) Application number: 98122256.5
(22) Date of filing: 23.11.1998
(51) Int. Cl.: H04Q 7/34, H04Q 7/36

(54) **Method of investigating and method of altering a topology of a cellular communication system**
Topologie Untersuchungsverfahren und Änderungsverfahren für zellulares Kommunikationssystem
Procédé d'analyse et procédé de modification de la topologie d'un système de communication cellulaire

(30) Priority: 26.11.1997 GB 9724887
(43) Date of publication of application: 04.08.1999
(73) Proprietor: MOTOROLA LTD, Basingstoke, Hampshire RG22 4PD (GB)
(72) Inventor: Gallagher, Mark, Faringdon, Oxfordshire SN7 7NT (GB); Trevor, Hanna, Lechlade, Gloucestershire GL7 (GB)
(74) Representative: Jepsen, Rene Pihl

(56) References cited:
- WO-A-97/06648
- WO-A-97/31502
- WO-A-97/32445

## Description

### Field of the Invention

The present invention relates to a method of investigating a topology of a cellular communication system. The present invention also relates to a method of altering a topology of a cellular communication system.

### Background of the Invention

In a cellular communication system the area over which service is provided is divided into a number of smaller areas called cells. Each cell is served from a base station, which has a corresponding antenna or antennas for transmission to and reception from a user station, normally a mobile station. Within the system, a user station is at any one time assigned to a given cell, known as the serving cell. In such a system a user station can be handed over to another cell. Handover can be initiated for various different reasons. One typical reason is that the subscriber has moved or is moving to a location where it would be more suitably assigned to an alternative cell. Procedures and criteria for handover are designated in the system, and such features are well known in the art.

In such a cellular communication system an allocation is made, for each cell, of those specific other cells that will serve as candidate handover cells. The list of allocated cells for a given cell is typically called a current neighbour list. For a given cell the candidate handover cells are in general chosen from those located in close geographical proximity to the given cell, and in the absence of any other factors could in theory be allocated on a simple basis such as all those cells geographically surrounding the given cell. However, due to factors such as geographical and construction features, e.g. obstructions, subscriber densities , subscriber movement patterns, and uneven sized or shaped cells, in practice it is necessary to allocate cells on a less systematic basis. The above described allocation arrangement of candidate handover relationships between the cells of a cellular communications system is termed the topology of the system.

In a given cellular communication system there will typically be a maximum number of cells that can be contained on the current neighbour list of a cell. In a Global System for Mobile communications (GSM) system, for example, this maximum number is 32.

A feature of the topology of a cellular communication system is that it requires repeated investigation and alteration. Alteration typically means either the addition of a cell to the neighbour list or the deletion of a cell from the neighbour list. Addition of a cell to the current neighbour list is desirable when a cell that would usefully carry out a significant number of handovers were it on the neighbour list is not currently on the neighbour list for some reason or other. The reason might be the existing topology was imperfectly planned, or it might be that circumstances have changed since the topology was last determined. Many factors that influence the suitability of the current topology can change, e.g. new buildings are built, new cells are added in the vicinity, subscriber usage levels and movement patterns change, and so on. Deletion of a cell from the current neighbour list is desirable when a cell is included in the current neighbour list of a given cell but in practice is seldomly or never actually handed over to that given cell. Deletion of a cell is also desirable when handover to that cell degrades the overall system performance.

WO 97/32445 discloses a method and apparatus for adaptively reconfiguring a neighbour cell list. Signal level measurements are made of neighbour cells and the cells having the highest measured signal levels are included in the neighbour list.

A prior art method of investigating and altering the topology is based on drive testing, which involves an operator literally driving around the coverage area of a cell in a vehicle. Drive routes, that is routes that are intended to be representative of the communications traffic contained in the cell under investigation, are chosen. The drive-testing method involves driving the chosen routes making multiple telephone calls in both the mobile-to-land and the land-to-mobile directions. The duration of the calls should reflect the typical holding time of standard subscriber calls for the particular drive route. The information from each call is recorded and post-processed. The drive test equipment is used to provide a breakdown of call successes and failures. It can also be used to highlight call quality. The recorded information is also processed to target poor call success rates and poor call quality. In practice a team of testers is required to carry out investigation of the topology of given cells for a particular region of a system.

Drive-testing entails a number of significant disadvantages. Complicated equipment is required by each team of drive-testers. In addition GPS position locating equipment is required for any subsequent analysis of the data since this fundamentally requires position information. Moreover the whole procedure is labour intensive and time-consuming. Being time-consuming not only involves direct cost implications but also has the disadvantage that the accuracy of the results achieved can be affected by changes during the time required for the testing and also it places restrictions on the network operator who cannot make changes to the system topology or other parameters during the period of drive-testing.

Another disadvantage is that detailed local knowledge is required to choose realistic drive routes. Moreover, how ever well chosen, such routes are merely representative of real usage in the cell, and no correlation is made between the chosen drive-test routes and real subscriber usage patterns.

Yet another disadvantage is that drive-testing ,as conventionally carried out in a vehicle, does not provide adequate correlation with respect to subscriber usage in which the subscribers move on foot, which usage is increasing with the use of hand-portable mobiles, in particularly within the office environment.

Thus it would be advantageous to overcome the above disadvantages of drive-testing and provide an improved method of investigating and altering a topology of a cellular communication system.

### Summary of the Invention

The present invention provides a method of investigating a topology in accordance with claim 1.

The present invention also provides a method of altering a topology of cells of a cellular communication system in accordance with claim 10.

Advantageous embodiments of the invention are as detailed in the dependent claims.

The methods according to the present invention achieve the advantage that investigation and alteration of the topology is carried out without the need for drive-testing, thus overcoming the labour intensive and time-consuming disadvantages of drive-testing. The present invention achieves assessment of position dependent and moving factors without requiring to actually be on the move and locate positions, as is the case with drive-testing. Thus position location equipment is not required. Yet another advantage is that the results achieved are more fully representative of the actual subscriber usage in a cell, thus overcoming the disadvantage of drive-testing that the drive-test routes are only partially representative of real usage and are also dependent on local knowledge for their planning. In this respect the present invention also has the advantage that the results achieved take full account of the usage of subscribers moving on foot.

### Brief Description of the Drawings

FIG. 1 is an illustration of a typical cellular communication system that may be used with the present invention.
FIG. 2 shows a representation of a neighbour list.
FIG. 3 is a flow diagram outlining the method of a preferred embodiment of the present invention.
FIG. 4 is an illustration of a histogram generated in the method of a preferred embodiment of the present invention.
FIG. 5 is an illustration of a histogram generated in the method of a preferred embodiment of the present invention.

### Description of Preferred Embodiments of the Invention

A first preferred embodiment relates to a cellular communication system which is a GSM system, although it will be appreciated that the invention is not limited to such a system and could equally be used in other time division multiple access (TDMA) systems, in code division multiple access (CDMA) systems, or other cellular communication systems including combined TDMA/CDMA systems.

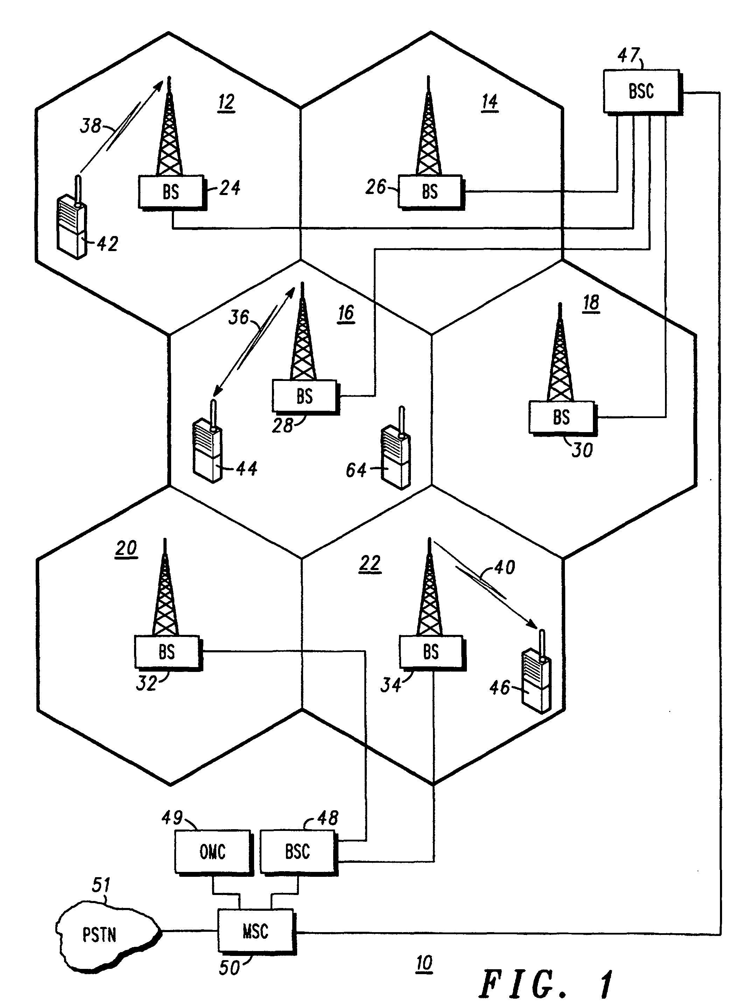

FIG. 1 illustrates a typical cellular communication system 10 having a coverage area formed by a number of cells 12-22. A conventional schematic representation showing a hexagonal cell pattern has been used to depict the cell areas, but in practice the shape and size of each cell will be different. In each cell, often at the centre, there is located a base station 24-34 which controls communications traffic 36, 38, 40 in its cell in accordance with procedures known to one skilled in the art. Each base station (BS) 24 - 34 may receive 38 and transmit 40 signals from/to mobile stations (MS) 42 - 46 that move throughout the communication system 10. In the preferred embodiment each of base stations 24, 26, 28 and 30 is coupled to mobile services switching centre (MSC) 50 through one base station controller (BSC) 47 and each of base stations 32 and 34 is coupled to MSC 50 through another BSC 48. An operations and maintenance centre (OMC) 49 is also coupled to MSC 50. Subject to the size of the communications system, OMC 49 may be responsible for the whole system or alternatively there may be a number of OMCs provided on a regional basis. MSC 50 is coupled to a public switched telephone network (PSTN) 51.

MS44 is assigned to BS28 as its serving cell by means of the following procedure. When MS 44 is switched on, it scans, by processes well known in the art, in an attempt to receive signals from base stations. In this scanning stage the MS scans using all the frequencies of the system. MS 44 receives signals from BS 28 and, in this example BSs 24, 26, 30 32 and 34. The MS determines which received signal is of the greatest strength, and then communicates to the corresponding BS, in the present case BS28, that it wishes to be connected to the system. BS28 undertakes a dialogue with MS44 to establish a communication path, and also at this stage interrogates the MS 44 to ascertain details from it including its identity. The identity of MS 44 and other details, such as cryptographic information, are transmitted by the BS to the BSC 47, and on to the MSC 50. The MSC 50 stores these details so that when the mobile station is paged it can route the call from the PSTN 51 via the MSC 50 to BSC 47, and on to BS28, where communication between MS 44 and the system occurs. At this stage of the assignment procedure MS 44 becomes under the control of BS28. Control information is transmitted from BS28 to MS44. This control information includes inter-alia a control message indicating which sub-set of frequencies should be scanned from now on. The frequencies of the sub-set correspond to the frequencies employed by the BSs on the current neighbour list of BS28. The current neighbour list is explained more fully below. In addition, in the present embodiment, the control information includes an instruction that MS 44 should also scan some of the other frequencies used in the system. In the communication system, certain frequencies, i.e. frequency channels, may be dedicated to carrying control messages and certain other frequencies, i.e. frequency channels, may be dedicated to carrying communication traffic. One choice of which other frequencies are to be scanned is that of choosing to instruct the mobile station to scan all the frequencies that are used for control messages in the system, as opposed to the frequencies that are used for communication traffic. The outcome of the assignment procedure is that MS44 is assigned to BS28 which is therefore termed its serving cell. Thereafter MS44 will communicate with BS28 in response to a page or on a periodic basis to confirm to BS28 that it is still operating normally.

MS 44 will remain assigned to BS28 as its serving cell until it is either turned off, or handed over to another cell in the vicinity. Handover to another cell involves the current neighbour list, which is now explained in detail.

In the system of the present embodiment it is necessary to allocate, for each BS, those specific other BSs that will serve as candidate handover BSs. The list of identities of allocated handover BSs, and hence allocated handover cells, is called the neighbour list. In the system according to the present embodiment the neighbour list is stored at the base station. However, in other systems it could alternatively be stored at the BSC, the OMC, or indeed even remotely. The candidate handover BSs in the present example of BS 28 are chosen from those located in close geographical proximity to the cell area of BS28, and in the absence of any other factors will be allocated on a simple basis of all those cells geographically surrounding it. It is noted however, that were other factors influential, such as geographical and construction features, e.g. obstructions, subscriber densities, subscriber movement patterns, and uneven sized or shaped cells, then it would be preferable to allocate cells on a less systematic basis. The resulting , allocation arrangement of candidate handover relationships between the BSs (and hence cells) of the cellular communications system is termed the topology of the system. In the present embodiment each of the five cells shown schematically around cell 16 in FIG. 1, that is cells 12, 14, 18, 20 and 22 are present on the current neighbour list of BS 28. Moreover, in the present embodiment, no further cells are in the current neighbour list. It is pointed out however that in general, in a given cellular communication system there will typically be a maximum number of cells that can be contained on the current neighbour list of a cell.

In the GSM system of the present embodiment each BS broadcasts on its control frequency continuously in the form of a broadcast control channel (BCCH). In the present GSM case the control channel frequency is in the form of the absolute radio frequency channel number (ARFCN). Encoded in the BCCH is a further BS identifier termed the BS identifier code (BSIC). The overall BCCH-ARFCN and BSIC combination thus forms identity data relating to the identity of the base station, i.e. identity data relating to the identity of the cell.

As previously mentioned, MS44 scans the frequencies determined by the control message from BS 28, i.e. the frequencies contained in the so-called scan list of BS28. By virtue of receiving the control frequency signals, MS44 determines a signal strength metric, that is a measure of the strength of the signal in the case of each received BCCH. It also decodes the BSIC. Thus MS44 which is assigned to BS28 as its serving cell acquires identity data and signal metric data in the form of three pieces of information from each BS, i.e. other cell, it has successfully scanned, namely the BSIC, the signal strength metric, and the respective control channel frequency. In the present GSM case the control channel frequency is in the form of an ARFCN index. These three pieces of information are attached together in the form of a module of data. Respective modules of data determined from a plurality of different BSs, i.e. a plurality of cells other than the serving cell, are passed back to BS28. In the present GSM embodiment, MS44 ranks the modules of data on the basis of the signal strength metric, and transmits only the six highest ranked modules of data to BS28. These are transmitted to BS28 in the form of a measurement report. Such a measurement report is fully defined in ETSI GSM Specifications 4.08.

The signal metrics in the measurement report contain two values. One value pertains to transmissions that are continuous, and employs what is termed the full rate channel. The other pertains to transmissions that are intermittent but follow the input signal and periods of silence, and employs what is termed the sub-rate channel. The intermittent signalling is generally termed discontinuous transmission (DTX). A flag in the measurement report indicates which value in the measurement report is valid. The modules of data are transmitted continuously.

The case of handover due to signal strength considerations will now be considered. However, it will be appreciated that this represents just one of a number of possible reasons for handover which are well known in the art.

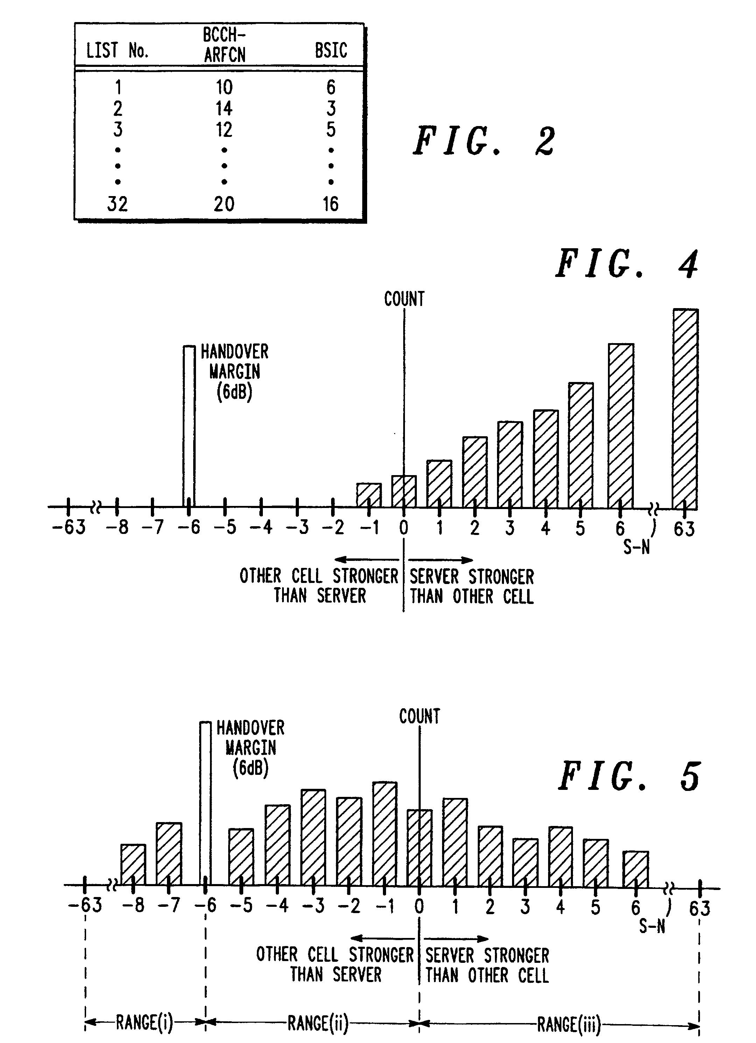

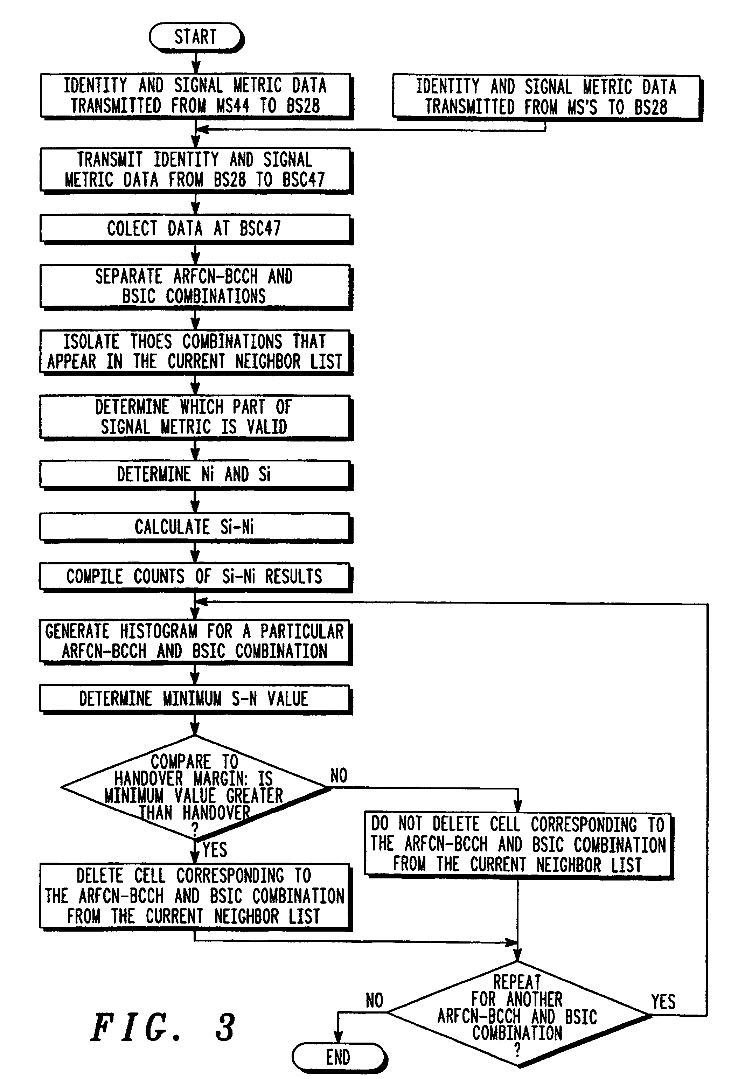

As MS44, which is assigned to and in communication with BS28, moves towards BS32, the relative level of the signal strength metric from adjoining BS32 will increase, whilst conversely the serving cell signal strength will decrease. This will be reflected in the appropriate parts of the measurement reports. Within BS28 the BCCH-ARFCN and BSIC combination is converted to a BS identity, in this case BS32. Such a conversion can only occur if the BCCH-ARFCN and BSIC combination and BS identity are contained in the neighbour list. FIG. 2 schematically shows a representation of a neighbour list, from which it can be seen how a BCCH-ARFCN and BSIC combination corresponds to a specific BS identity. The inclusion of BS 32 in the current neighbour list of BS28 plays a role in the remainder of the handover process from BS28 to BS32 which is now described.

When the signal strength metric from BS32 exceeds that of BS28 (the serving cell) by more than the handover margin, which in this case is 6dB, then MS44 is instructed by BS28 or some other system element to become assigned to BS32 as its serving cell instead of BS28. This re-assignment procedure involves changing frequency of transmission so that MS44 is on a frequency utilised by BS32. Also, in the present GSM embodiment the timeslot (TDMA frame position) is additionally specified. As in the original assignment procedure, during handover a scan list of frequencies pertinent to BS32 is received by MS44. The measurement reports between MS44 and BS32 differ over those earlier ones between MS44 and BS28 in that the serving information now relates to BS32, whilst the other modules of information will not relate to all the same ones that were present in the case of BS28. In the process of handing over, information is transmitted between BS28 and BS32 so that the receiving cell (BS32) knows that MS44 will now become under its control. Signalling information flows between BSCs 47 and 48 and then BS 28 and 32 via the MSC, whilst any connection to the PSTN is transparent. The BS and BSC elements will update counter records to reflect that handover has occurred, and the records will subsequently be transmitted to OMC 49 for storage.

The method of this preferred embodiment is outlined in flow diagram form in FIG. 3. The data constituting the measurement reports transmitted from MS44 to BS28, which in this embodiment constitutes the identity data and the signal metric data, is further transmitted from BS 28 to BSC 47, where it is collected to provide collected data. In the present embodiment the corresponding data from a plurality of other mobile stations assigned to BS28 is also transmitted to BS28 and further transmitted from BS 28 to BSC 47 , but it is pointed out that the invention may nevertheless be usefully employed using the data from just one mobile station. It is noted that the data could according to other embodiments of this invention be collected at BS 28 itself, or alternatively at other network nodes. In the present embodiment the way in which the step of determining, at least in part from the collected data, the identity of the one or more of the cells other than the serving cell, is carried out, is that from this collected data the respective ARFCN-BCCH and BSIC combinations from the modules of information within each measurement report are separated and then compared against the list of such combinations held on the current neighbour list. This procedure is implemented by connecting a computer to the BSC and using routine computer methods well known in the art. An alternative means on implementing these procedures would be to use a computer or part of a computer integrated in the BSC or BS itself. Those identities and corresponding ARFCN-BCCH and BSIC combinations that appear in the current neighbour list are isolated. This is also carried out by routine computer methods.

Before any calculations begin, the measurement reports are individually examined to determine which part of the signal metric is valid. This is done by examining the DTX flag and appropriately using the full or sub-rate value in the serving cell information contained within the measurement report. In the case of other systems compared to that of the present embodiment, it would be readily apparent to the skilled person what procedure would be required to determine the valid value from the available data, depending on the particular format of the data in that system.

In the present embodiment the way in which the step of comparing the identities of the cells other than the serving cell with the cell identities of the current neighbour list is carried out is as follows. For a given ARFCN-BCCH and BSIC combination (i.e. cell identity), from each measurement report that is sampled, the appropriate signal strength value from the measurement report information module (termed Ni, where i refers to the ith sampled measurement report) is determined. Also the corresponding value of the full or sub-rate, as appropriate, value of the signal strength, termed Si, from the serving cell in the same ith measurement report is determined. In the present embodiment the way in which the step of comparing, responsive to the previous step, a signal metric from the other cells with a signal metric from the serving cell is carried out is that a calculation of Si minus Ni is performed for each sampled measurement report . This can be automated using known computer methods. On the basis of the plurality of sampled measurement reports a list of counts for individual Si-Ni results is compiled.

Resulting individual lists of Si-Ni for respective ARFCN-BCCH and BSIC combinations are statistically processed to count occurrences and a histogram is generated therefrom. Such a histogram is shown in FIG. 4. Generating this histogram implements the step of ranking the outcomes of the previous comparison step in order of respective differences between the metrics of the other cells relative to the serving cell. This histogram thus shows the different values of S-N obtained for a single particular ARFCN-BCCH and BSIC combination (i.e. a single other cell). A step of determining which of the differences constitutes a maximum or minimum of the outcomes that are ranked is carried out in which the resulting histogram of the type shown in FIG. 4 is analysed to determine the minimum S-N value that has arisen in the sampled measurement reports for that BS. In the example of FIG. 4 that value can be seen to be S-N=-1dB. This minimum value is compared to the applicable handover margin. In the present case the handover margin is 6dB, which is therefore represented on the histogram of FIG. 4 as -6, since it represents the amount by which the other cell must be stronger than the serving cell for handover to be initiated.

Thus it can be seen from the histogram shown in FIG. 4 that the cell of the ARFCN-BCCH and BSIC combination to which it relates has not approached the handover condition in any of the real situations represented in the data that has been collected, sampled and analysed. Since the cell referred to has not approached the handover condition, it can be considered to be inappropriately contained in the current neighbour list. Consequently as a means of improving the topology of the system, the topology of the system is altered by altering the current neighbour list by deleting this cell from the current neighbour list, since it fulfils the predetermined criteria of the present embodiment. The predetermined criteria of the present embodiment includes a function of the maximum or minimum S-N difference and of a handover margin employed in the system, the criteria being that the minimum S-N value be greater than the handover margin whose magnitude is 6dB and which is therefore represented in the sign convention of the histogram as - 6dB.

The above procedure may then be repeated for another ARFCN-BCCH and BSIC combination, i.e. cell identity, and so on.

In carrying out the present embodiment a statistical sampling procedure is employed. The identity data and the signal metric data is in the form of modules of data and the statistical sampling procedure comprises sampling a selection of the modules of data. More particularly the modules of data are constituted by the GSM measurement reports which are subjected to a statistical sampling procedure. In other words not every measurement report need be fully processed. In the present embodiment many tens of thousand of measurement reports, providing a plurality of the signal metrics acquired over time, are processed so that the topology calculations are carried out with a high degree of accuracy. This provides the advantage that the results are not biased for example by a single long communication between MS44 and BS28, since instead, results from a plurality of communications between MS44 and BS28 are used. Thus information across the whole of the coverage area of BS28, i.e. over the whole cell, can be provided. Also in the present embodiment, data from one or more other mobile stations 64 within the cell may also be collected, sampled and used in the calculations. By using data from a plurality of communications, the measurement report data can originate from users moving over the whole cell, due to the mobility of the mobile stations within the GSM system of the present embodiment. The same advantages can also be achieved in the case of any other mobile communication system. Sampling the measurement reports is implemented such that from the series of measurement reports being collected, one report is analysed, then a number are skipped, i.e. ignored, then the next measurement report is analysed, then a number are skipped, and so on. One advantageous way of implementing this is to select every nth measurement report where n is an integer. The sampling procedure creates a sub-set of the whole data set of statistics. This process allows more information to be processed for a given size of computer memory and processing capability. Furthermore, many measurement reports are similar, so by adopting a sampling procedure more variants of information modules within the measurement report can be listed with the given computer. Alternative statistical sampling approaches can be used in the present embodiment, and is chosen by the skilled person according to the prevalent patterns of data and desired or available amount of processing capacity. For example, the data can be collected on a sampling basis and then all the collected data further processed, and this may include collecting from only some of the mobile stations in a cell.

In the above preferred embodiment, hereinafter termed the deletion embodiment, alteration of the topology includes the step of deleting a cell identity from the current neighbour list. In another preferred embodiment, hereinafter termed the first addition embodiment, alteration includes the step of adding a cell identity to the current neighbour list, rather than deletion. The first addition embodiment is now described, and where applicable, items and procedures mentioned relate directly to those already mentioned in the above description of the deletion embodiment.

As already described above, during the assignment procedure MS 44 becomes under the control of BS28. Control information is transmitted from BS28 to MS44. This control information includes inter-alia a control message indicating which sub-set of frequencies should be scanned from now on. The frequencies of the sub-set correspond to the frequencies employed by the BSs on the current neighbour list of BS28. In addition, in the present embodiment, the control information includes an instruction that MS 44 should also scan some of the other frequencies used in the system. In the communication system certain frequencies, i.e. frequency channels, may be dedicated to carrying control messages and certain other frequencies, i.e. frequency channels, may be dedicated to carrying communication traffic. One choice of which other frequencies are to be scanned is that of choosing to instruct the mobile station to scan all the frequencies that are used for control messages in the system, as opposed to the frequencies that are used for communication traffic.

The first addition embodiment is employed when, on comparing the identity data related to the identities of a plurality of cells other than the serving cell, which in the present case consists of ARFCN-BCCH and BSIC combinations, to the neighbour list in BS28, a combination is found that has no cross reference to a BS identity, i.e. the ARFCN-BCCH and BSIC combination is not on the neighbour list. That is, the identity data has come from one of the other frequencies selected to be scanned, as explained in the previous paragraph. In the present embodiment, the next step is to create a histogram for the particular ARFCN-BCCH and BSIC combination. The histogram is again of the different values of S-N obtained for the particular ARFCN-BCCH and BSIC combination, and the method of producing the histogram is the same as in the deletion embodiment described above, including the option to process the data according to a statistical sampling procedure. However, a difference over the previous deletion embodiment is that in the present addition embodiment, since the ARFCN-BCCH and BSIC combination was not on the neighbour list, the histogram is produced before the identity of the base station, i.e. cell, has yet been determined. Thus in the present embodiment, the comparison steps referred to as c) and d) in the appended claims are carried out before the determination step referred to as b). It is thus emphasised that the various steps can be carried out in different order according to the present invention, depending merely on when it is most convenient or economical to implement each step. In the present case, it is directly evident to the skilled person that it is not necessary to identify the cell under investigation until it has been decided whether to add it to the neighbour list. However, in other circumstances the skilled person may, for evident reasons, choose to identify the cell first. Similarly, depending on the details of any particular system to which the present invention is applied, the skilled person may under the present invention elect to carry out two or more of the steps on an iterative basis, for example depending on the system it may be necessary or desirable to use an iterative process involving the determining step b) and the comparison step c).

FIG. 5 shows an example of a histogram from an individual ARFCN-BCCH and BSIC combination in the present first addition embodiment. In this embodiment the handover margin of the system is +6dB, which is therefore represented on this histogram as -6 (since this histogram is for S-N, whereas the handover margin is in effect in terms of N-S). It is noted that a positive value of S-N means the server signal strength is greater than that from the other cell under consideration, whereas a negative value means the other cell signal strength is greater than the server signal strength. Negative values beyond -6 moreover represent cases where the other cell signal strength is greater than that of the server by more than the handover margin. In the present embodiment which is for a GSM system, the range of S-N values can extend from -63 to +63. The S-N values constitute the results of the step of comparing the signal metrics from the cells other than the serving cell with the corresponding signal metric from the serving cell. A further step of sorting the results of this comparison step into a plurality of ranges according to the respective differences between the other cells and the serving cell is implemented in that for the purposes of assessing a criteria as to whether the particular cell should be added to the neighbour list, the histogram is sorted into ranges, as also shown in FIG. 5. In the present example the ranges are as follows: (i) -63 to -6, (ii) between -6 and 0, inclusive, and (iii) +1 to +63. Thus the ranges include a correspondence with the handover margin parameter employed in the system, which in this example is +6dB which is represented on the histogram as -6, which determines in this example the division between range (I) and range (ii).

A calculation is then made to determine what proportion of the S-N differences represented on the histogram fall in a given range, in this example within range (i). In the present embodiment, if the proportion is found to fulfil the criteria of being greater than 1% the ARFCN-BCCH and BSIC combination to which the histogram applies is considered to fulfil the criteria for addition, and this ARFCN-BCCH and BSIC combination, i.e. cell identity, is added to the current neighbour list to alter the topology of the system. The criteria can alternatively include consideration of the proportion of reports that fall in one or more of the other ranges into which the histogram is divided. For example, the criteria can be set that in addition to 1 % of the reports falling in range (i), also more than 1% of the reports must fall in range (ii). It will be appreciated that there are a vast number of exact criteria combinations that can be used, and that the skilled person can choose or develop these according to need and experience using the skills normal in the field. The skilled person can likewise vary the limits of the ranges chosen according to the particular requirements of the system to which the invention is applied. It can be seen that in the present embodiment the handover margin has inter alia been used in determining the ranges and hence directly the predetermined criteria for addition. However, other factors could be included in combination with the handover margin or alternatively instead of the handover margin, according to the particular system employed and in view of other requirements.

An example of another factor that can be used in the predetermined criteria is a function of a signal quality indication metric employed in the system. Such a signal quality indication metric is present in the GSM measurement reports of the present embodiment. The predetermined criteria can include this signal quality indication metric in combination with the handover margin. One example is to determine what proportion of the measurement reports have a signal quality value greater than 5 as well as falling in the respective signal strength ranges mentioned above. For example the overall criteria can be that 1% of the sampled measurement reports for a given ARFCN-BCCH and BSIC combination must both fall in range (i) and have a signal strength greater than 5. It will be appreciated that incorporating the signal quality level as well as signal strength effectively toughens the criteria for addition, so if desired the signal strength/handover margin part of the overall criteria can be made less stringent when also incorporating signal quality level, without overall reduction in the suitability of the topology alterations that result. It is again emphasised that there are a vast number of factors, values and combinations that can be used in setting the criteria, and these can be implemented by the skilled person according to the precise requirements and characteristics of the system to which the invention is applied. For example, in some systems it may be desired to improve quality but have low traffic volumes, others systems may need increased capacity to as great an extent as possible whilst being able to accept a lower quality level. Also, different criteria may be applied to different base stations within a given system as appropriate.

In the present first addition embodiment the identity of the cell corresponding to the ARFCN-BCCH and BSIC combination that it has been decided should be added to the current neighbour list is then determined, at least in part from the collected data. Thus, in this embodiment, determining step b) of the claims is carried out after comparing steps c) and d), the order of the steps in general being chosen by the skilled person as mentioned already above in the description of the present first addition embodiment.

In the present first addition embodiment, which relates to a GSM system, the determination of the identity of the cell is achieved by applying the assumption that the ARFCN-BCCH and BSIC combination is unique to a particular BS. If in certain circumstances this assumption proves to be imperfect, then supplementary information, for example the X and Y coordinates of each BS in the system, can be used. The distance between the serving BS and all other BSs is calculated, using trigonometric calculations well known to those in the art to provide a database having the ARFCN-BCCH and BSIC combinations of different BSs in correspondence with their respective distances from the serving BS. This database is sorted according to ARFCN-BCCH and BSIC combination and in ascending distance from the serving BS. The database is searched to find those cells that have the candidate ARFCN-BCCH and BSIC combination and have an appropriate distance from the serving BS. The distance is appropriate to range and coverage of the serving cell and its surrounding neighbours. For example in a city cells a few kilometres away would be considered, whereas in country areas the neighbours may be at a greater distance. Further information in terms of the antenna orientation and the predicted signal strength in the serving cell's coverage area can be used to distinguish when two neighbouring cells have similar distances from the serving cell and the same ARFCN-BCCH and BSIC combination in a system.

In the first addition embodiment described directly above, S-N values were calculated and used. An alternative embodiment in which this is not necessarily the case, hereinafter referred to as the second addition embodiment, is now described.

The identities of the cells other than the serving cell are repeatedly ranked in a ranking order according to the respective signal strength metrics. That is, each module of information is ranked according to the signal strength metric, where each module of information comprises an ARFCN-BCCH and BSIC combination and an attached signal strength metric value. In a GSM system the six cell identities with the highest ranked signal strength metrics are reported in the measurement report, the six ranking positions being termed neighbour positions, in which neighbour position 1 represents the highest signal strength. For a particular cell identity, which in this embodiment is in the form of a particular ARFCN-BCCH and BSIC combination, the extent that this respective cell identity appears in the six respective ranking positions in the sampled data is then determined. This can be performed using an automated procedure using known computer methods. The predetermined criteria for addition in the present embodiment includes a function relating to what extent a respective other cell identity appears in a predetermined position or range of positions within the ranking order, in that addition will be appropriate if this particular ARFCN-BCCH and BSIC combination has been reported in neighbour position 1 in more than 10% of the measurement reports sampled. If this criteria is fulfilled, the identity of the cell is determined at least in part from the ARFCN-BCCH and BSIC combination and this cell identity is added to the current neighbour list to alter the topology of the system, in the same fashion as in the first addition embodiment described above. It will be appreciated that numerous possible extents of appearance in either the first neighbour position or combinations of different neighbour positions, including ranges of positions, can be defined in the predetermined criteria, and that the exact choice will be made by the skilled person depending on the particular system requirements. For example, in the present GSM system embodiment the extents of appearance can also be analysed by allocating the six neighbour positions into a number of ranges, for example three ranges consisting respectively of neighbour position 1, neighbour positions 2 to 3, and neighbour positions 4 to 6, and the predetermined criteria can be that the particular ARFCN-BCCH and BSIC combination has been reported in neighbour position 1 in more than 10% of the measurement reports sampled or that the particular ARFCN-BCCH and BSIC combination has been reported in the range consisting of neighbour positions 2 to 3 in more than 30% of the measurement reports sampled.

The two addition embodiments described above contain respective examples of predetermined criteria which can be used as a criteria for determining when a cell identity should be added to the current neighbour list to alter the topology of the communication system. It is further noted that the respective criteria can be used in conjunction with each other to obtain a further advantageous embodiment of the present invention. For example, the criteria for addition can be determined such that
(i) a particular ARFCN-BCCH and BSIC combination must have more than 1% of its S-N values falling within range (i) of the histogram shown in FIG. 5, AND
(ii) the particular ARFCN-BCCH and BSIC combination must be reported in neighbour position 1 in more than 10% of the measurement reports sampled.

In all the addition embodiments described above, after adding, or determining to add, a particular ARFCN-BCCH and BSIC combination to the current neighbour list, another ARFCN-BCCH and BSIC combination can then be processed.

In all of the embodiments described above, in the case of GSM systems it is further possible to choose the predetermined criteria to include a function of a GSM parameter termed RXLEV_surround_cell. This parameter is a measure of the required signal strength that a cell on a neighbour list must satisfy before being considered within the normal handover processes. This parameter can use averaging to isolate very weak signals from causing spurious handovers. In the deletion embodiment of the present invention the criteria can include that deletion be carried out if a cell on the current neighbour list has never exceeded the RXLEV_surround_cell threshold in the data employed or if it has only exceeded it less often than a predetermined threshold of occurrences. In the addition embodiments of the present invention the criteria can include that further to the requirements already described above another criteria that also needs to be satisfied for addition to take place is that the RXLEV_surround_cell threshold must be exceeded at least once or at least more than some other predetermined occurrence level in the course of the data employed.

## Claims

1. A method of investigating a topology of a cellular communication system (10) in which system one or more mobile stations (44, 64) assigned to a serving cell (16) acquires identity data related to identities of a plurality of cells (12, 14, 18, 20, 22) other than said serving cell (16) and signal metric data related to respective signal metrics from said serving cell (16) and said plurality of other cells (12, 14, 18, 20, 22), the topology being an allocation arrangement of candidate handover relationships between cells (12, 14,16, 18, 20, 22) of the cellular communication system (10),
said cellular communication system (10) comprising a current neighbour list comprising an identity of one or more cells (12, 14, 18, 20, 22) which are allocated as candidate handover cells in a current topology of the system; the method comprising the steps of:
a) collecting at least some of said identity data and at least some of said signal metric data to provide collected data;
b) determining, at least in part from said collected data, the identity of a first said other cell(12, 14, 18, 20, 22);
c) comparing the identity of said first said other cell (12, 14, 18, 20, 22) with the cell identities of the current neighbour list; and **characterized by** further comprising the steps of:
d) comparing, responsive to step c), a first signal metric from said first said other cell (12, 14, 18, 20, 22) with a second signal metric from said serving cell (16); and
e) determining the topology in response to the step d) of comparing.

2. A method according to claim 1 wherein said steps
a) - d) are performed for a plurality of said other cells (12, 14, 18, 20, 22).

3. A method according to claim 1 wherein said steps
a) - d) are performed for a plurality of mobile stations (44,64) assigned to said serving cell (16).

4. A method according to claim 1 wherein said step d) is performed for a plurality of said signal metrics acquired over time.

5. A method according to claim 1 wherein one or more of steps a), b), c), and d) is performed according to a statistical sampling procedure.

6. A method according to claim 5 wherein said identity data and said signal metric data is in the form of modules of data and said statistical sampling procedure comprises sampling a selection of said modules of data.

7. A method according to claim 6 wherein said cellular communication system (10) is a GSM system, said modules of data are measurement reports, and said selection comprises selecting every nth measurement report where n is an integer.

8. A method according to claim 1 wherein said identity data and said signal metric data is acquired by said one or more mobile stations (44, 64) by scanning said other cells (12, 14, 18, 20, 22) and/or said serving cell (16).

9. A method according to claim 1 wherein said signal metrics are signal strength metrics.

10. A method of altering a topology of a cellular communication system (10) in which system one or more mobile stations (44,64) assigned to a serving cell (16) acquires identity data related to identities of a plurality of cells (12, 14, 18, 20, 22) other than said serving cell (16) and signal metric data related to respective signal metrics from said serving cell (16) and said plurality of other cells(12, 14, 18, 20, 22), the topology being an allocation arrangement of candidate handover relationships between cells (12, 14,16, 18, 20, 22) of the cellular communication system (10),
said cellular communication system(10) comprising a current neighbour list comprising an identity of one or more cells (12, 14, 18, 20, 22) which are allocated as candidate handover cells in a current topology of the cellular communication system (10);
the method comprising the steps of:
a) collecting at least some of said identity data and at least some of said signal metric data to provide collected data;
b) determining, at least in part from said collected data, the identity of a first said other cell (12, 14, 18, 20, 22);
c) comparing the identity of said first said other cell (12, 14, 18, 20, 22) with the cell identities of the current neighbour list;
the method **characterized by** further comprising the step of:
d) comparing, responsive to step c), a first signal metric from said first said other cell (12, 14, 18, 20, 22) with a second signal metric from said serving cell (16); and
e) altering the current neighbour list in respect of said first said other cell (12, 14, 18, 20, 22) if the outcome of step d) fulfils a predetermined criteria.

11. A method according to claim 10 wherein said steps a) - e) are performed for a plurality of said other cells (12, 14, 18, 20, 22).

12. A method according to claim 10 wherein said steps a) - d) are performed for a plurality of mobile stations (44, 64) assigned to said serving cell.

13. A method according to claim 10 wherein said step d) is performed for a plurality of said signal metrics acquired over time.

14. A method according to claim 10 wherein one or more of steps a), b), c), and d) is performed according to a statistical sampling procedure.

15. A method according to claim 14 wherein said identity data and said signal metric data is in the form of modules of data and said statistical sampling procedure comprises sampling a selection of said modules of data.

16. A method according to claim 15 wherein said system is a GSM system, said modules of data are measurement reports, and said selection comprises selecting every nth measurement report where n is an integer.

17. A method according to claim 10 wherein said identity data and said signal metric data is acquired by said one or more mobile stations (64, 64) by scanning said other cells (12, 14, 18, 20, 22) and/or said serving cell (16).

18. A method according to claim 10 wherein said signal metric is a signal strength metric.

19. A method according to claim 10 wherein said system is a GSM system and said predetermined criteria includes a function of a GSM parameter termed RXLEV_surround_cell.

20. A method according to claim 10 comprising the further steps of ranking the outcomes of said step d) in order of respective differences between said signal metrics of said first said other cell (12, 14, 18, 20, 22) relative to said serving cell (16), and determining which of said differences constitutes a maximum or minimum of said outcomes that are ranked; and wherein said step e) is performed by way of deleting said first other cell identity from the current neighbour list and said predetermined criteria includes a function of said maximum or minimum difference and of a handover margin parameter employed in said system.

21. A method according to claim 10 wherein said step e) comprises deleting a cell identity from the current neighbour list.

22. A method according to claim 21 wherein said predetermined criteria includes a function of a handover margin parameter employed in said system.

23. A method according to claim 11 comprising a further step of sorting the results of said step d) into a plurality of ranges according to respective differences between the signal metrics of said other cells (12, 14, 18, 20, 22) and that of said serving cell (16); and wherein said predetermined criteria includes a function based on what proportion of said differences fall in a given range, and said step e) comprises adding a cell identity to the current neighbour list.

24. A method according to claim 23 wherein said ranges include a correspondence with a handover margin parameter employed in said cellular communication system (10).

25. A method according to claim 11 wherein the identities of a plurality of said other cells(12, 14, 18, 20, 22) are repeatedly ranked in ranking postions in a ranking order according to said signal metrics, said predetermined criteria includes a function relating to what extent a respective other cell identity appears in a predetermined position or range of positions within said ranking order, and said step e) comprises adding a cell identity to the current neighbour list.

26. A method according to claim 25 wherein said ranking positions are six neighbour positions in a measurement report of a GSM system, and said function relating to what extent a respective other cell identity appears in a predetermined position or range of positions within said ranking order includes allocation of said six neighbour positions into three ranges consisting of neighbour position 1, neighbour positions 2 to 3, and neighbour positions 4 to 6 respectively.

27. A method according to claim 10 wherein said step e) comprises adding a cell identity to the current neighbour list.

28. A method according to claim 27 wherein said predetermined criteria includes a function of a signal quality indication metric employed in said system.

## Patentansprüche

1. Verfahren zum Untersuchen einer Topologie eines zellularen Kommunikationssystems (10), wobei in dem System eine oder mehrere mobile Stationen (44, 64), die einer Versorgungszelle (16) zugewiesen sind, Identitätsdaten, die sich auf Identitäten einer Mehrzahl von Zellen (12, 14, 18, 20, 22), außer der Versorgungszelle (16), beziehen, und Signalmetrikdaten, die sich auf entsprechende Signalmetriken der Versorgungszelle (16) und der Mehrzahl von anderen Zellen (12, 14, 18, 20, 22) beziehen, erfassen, wobei die Topologie eine Zuordnungsanordnung von infragekommenden Übergabebeziehungen zwischen den Zellen (12, 14, 16, 18, 20, 22) des zellularen Kommunikationssystems (10) ist, wobei das zellulare Kommunikationssystem (10) eine aktuelle Nachbarliste umfasst, die eine Identität von einer oder mehreren Zellen (12, 14, 18, 20, 22) umfasst, die als infragekommende Übergabezellen in einer aktuellen Topologie des Systems zugeordnet sind;
wobei das Verfahren die folgenden Schritte umfasst:
a) Erfassen mindestens einiger der Identitätsdaten und mindestens einiger der Signalmetrikdaten, um erfasste Daten zur Verfügung zu stellen;
b) Bestimmen der Identität einer ersten der anderen Zellen (12, 14, 18, 20, 22), mindestens zum Teil von den erfassten Daten;
c) Vergleichen der Identität der ersten anderen Zelle (12, 14, 18, 20, 22) mit den Zellenidentitäten der aktuellen Nachbarliste; und **dadurch gekennzeichnet, dass** es weiter die folgenden Schritte umfasst:
d) Vergleichen, in Reaktion auf den Schritt c), einer ersten Signalmetrik von der ersten anderen Zelle (12, 14, 18, 20, 22) mit einer zweiten Signalmetrik von der versorgungszelle (16); und
e) Bestimmen der Topologie in Reaktion auf den Schritt d) des Vergleichens.

2. Verfahren gemäß Anspruch 1, wobei die Schritte a) - d) für eine Mehrzahl der anderen Zellen (12, 14, 18, 20, 22) durchgeführt werden.

3. Verfahren gemäß Anspruch 1, wobei die Schritte a) - d) für eine Mehrzahl der mobilen Stationen (44, 64) durchgeführt werden, die der Versorgungszelle (16) zugewiesen sind.

4. Verfahren gemäß Anspruch 1, wobei der Schritt d) für eine Mehrzahl der über die Zeit erfassten Signalmetriken durchgeführt wird.

5. Verfahren gemäß Anspruch 1, wobei einer oder mehrere der Schritte a), b), c) und d) gemäß einem statistischen Abtastverfahren durchgeführt werden.

6. Verfahren gemäß Anspruch 5, wobei die Identitätsdaten und die Signalmetrikdaten in der Form von Modulen von Daten vorliegen und das statistische Abtastverfahren ein Abtasten einer Auswahl der Modulen von Daten umfasst.

7. Verfahren gemäß Anspruch 6, wobei das zellulare Kommunikationssystem (10) ein GSM-System ist, die Module von Daten Messprotokolle sind und die Auswahl das Auswählen von jedem n-ten Messprotokoll umfasst, wobei n eine ganze Zahl ist.

8. Verfahren gemäß Anspruch 1, wobei die Identitätsdaten und die Signalmetrikdaten durch eine oder mehrere der mobilen Stationen (44, 64) durch ein Abtasten der anderen Zellen (12, 14, 18, 20, 22) und/oder der Versorgungszelle (16) erfasst werden.

9. Verfahren gemäß Anspruch 1, wobei die Signalmetriken Signalstärkenmetriken sind.

10. Verfahren zum Ändern einer Topologie eines zellularen Kommunikationssystems (10), wobei in dem System eine oder mehrere mobile Stationen (44, 64), die einer Versorgungszelle (16) zugewiesen sind, Identitätsdaten, die sich auf Identitäten einer Mehrzahl von Zellen (12, 14, 18, 20, 22), außer der Versorgungszelle (16), beziehen, und Signalmetrikdaten, die sich auf entsprechende Signalmetriken der Versorgungszelle (16) und der Mehrzahl von anderen Zellen (12, 14, 18, 20, 22) beziehen, erfassen, wobei die Topologie eine Zuordnungsanordnung von infragekommenden Übergabebeziehungen zwischen den Zellen (12, 14, 16, 18, 20, 22) des zellularen Kommunikationssystems (10) ist, wobei das zellulare Kommunikationssystem (10) eine aktuelle Nachbarliste umfasst, die eine Identität von einer oder mehreren Zellen (12, 14, 18, 20, 22) umfasst, die als infragekommende Übergabezellen in einer aktuellen Topologie des zellularen Kommunikationssystems (10) zugeordnet sind;
wobei das Verfahren die folgenden Schritte umfasst:
a) Erfassen mindestens einiger der Identitätsdaten und mindestens einiger der Signalmetrikdaten, um erfasste Daten zur Verfügung zu stellen;
b) Bestimmen, mindestens zum Teil von den erfassten Daten, der Identität einer ersten der anderen Zellen (12, 14, 18, 20, 22);
c) Vergleichen der Identität der ersten anderen Zelle (12, 14, 18, 20, 22) mit den Zellenidentitäten der aktuellen Nachbarliste;
wobei das Verfahren **dadurch gekennzeichnet ist, dass** es weiter die folgenden Schritte umfasst:
d) Vergleichen, in Reaktion auf den Schritt c), einer ersten Signalmetrik von der ersten anderen Zelle (12, 14, 18, 20, 22) mit einer zweiten Signalmetrik von der Versorgungszelle (16); und
e) Ändern der aktuellen Nachbarliste in Bezug auf die erste andere Zelle (12, 14, 18, 20, 22), wenn das Ergebnis des Schrittes d) ein vorbestimmtes Kriterium erfüllt.

11. Verfahren gemäß Anspruch 10, wobei die Schritte a) - e) für eine Mehrzahl der anderen Zellen (12, 14, 18, 20, 22) durchgeführt werden.

12. Verfahren gemäß Anspruch 10, wobei die Schritte a) - d) für eine Mehrzahl der mobilen Stationen (44, 64) durchgeführt werden, die der Versorgungszelle zugewiesen sind.

13. Verfahren gemäß Anspruch 10, wobei der Schritt d) für eine Mehrzahl der über die Zeit erfassten Signalmetriken durchgeführt wird.

14. Verfahren gemäß Anspruch 10, wobei einer oder mehrere der Schritte a), b), c) und d) gemäß einem statistischen Abtastverfahren durchgeführt werden.

15. Verfahren gemäß Anspruch 14, wobei die Identitätsdaten und die Signalmetrikdaten in der Form von Modulen von Daten vorliegen und das statistische Abtastverfahren ein Abtasten einer Auswahl der Modulen von Daten umfasst.

16. Verfahren gemäß Anspruch 15, wobei das System ein GSM-System ist, die Datenmodule Messprotokolle sind und die Auswahl ein Auswählen von jedem n-ten Messprotokoll umfasst, wo n eine ganze Zahl ist.

17. Verfahren gemäß Anspruch 10, wobei die Identitätsdaten und die Signalmetrikdaten durch eine oder mehrere der mobilen Stationen (44, 64) durch Abtasten der anderen Zellen (12, 14, 18, 20, 22) und/oder der Versorgungszelle (16) erfasst werden.

18. Verfahren gemäß Anspruch 10, wobei die Signalmetrik eine Signalstärkenmetrik ist.

19. Verfahren gemäß Anspruch 10, wobei das System ein GSM-System ist und die vorbestimmten Kriterien eine Funktion eines GSM-Parameters umfasst, der als RXLEV_surround_cell bezeichnet wird.

20. Verfahren gemäß Anspruch 10, das die folgenden weiteren Schritte umfasst: Erstellen einer Rangordnung der Ergebnisse des Schrittes d) in der Reihenfolge der jeweiligen Unterschiede zwischen den Signalmetriken der ersten anderen Zelle (12, 14, 18, 20, 22) und der Versorgungszelle (16) und Bestimmen, welche der Unterschiede ein Maximum oder Minimum der in Rangordnung gebrachten Ergebnisse darstellen; und wobei der Schritt e) durch Löschen der ersten anderen Zellenidentität von der aktuellen Nachbarliste durchgeführt wird und die vorbestimmten Kriterien eine Funktion des maximalen oder minimalen Unterschiedes und eines Übergabebegrenzungsparameters, der in dem System eingesetzt wird, umfassen.

21. Verfahren gemäß Anspruch 10, wobei der Schritt e) das Löschen einer Zellenidentität von der aktuellen Nachbarliste umfasst.

22. Verfahren gemäß Anspruch 21, wobei die vorbestimmten Kriterien eine Funktion eines Übergabebegrenzungsparameters, der in dem System eingesetzt wird, umfassen.

23. Verfahren gemäß Anspruch 11, das einen weiteren Schritt des Sortierens der Ergebnisse des Schrittes d) in eine Mehrzahl von Bereichen gemäß den jeweiligen Unterschieden zwischen den Signalmetriken der anderen Zellen (12, 14, 18, 20, 22) und der Signalmetrik der Versorgungszelle (16) umfasst; und wobei die vorbestimmten Kriterien eine Funktion umfassen, die darauf basiert, welcher Anteil der Unterschiede in einen gegebenen Bereich fällt und der Schritt e) das Hinzufügen einer Zellenidentität zu der aktuellen Nachbarliste umfasst.

24. Verfahren gemäß Anspruch 23, wobei die Bereiche eine Übereinstimmung mit einem Übergabebegrenzungsparameter, der in dem zellularen Kommunikationssystem (10) eingesetzt wird, umfassen.

25. Verfahren gemäß Anspruch 11, wobei die Identitäten einer Mehrzahl der anderen Zellen (12, 14, 18, 20, 22) wiederholt in einer Rangordnung gemäß den Signalmetriken angeordnet werden, wobei die vorbestimmten Kriterien eine Funktion umfassen, die sich darauf bezieht, bis zu welchem Umfang eine entsprechende andere Zellenidentität in einer vorbestimmten Position oder einem vorbestimmten Bereich von Positionen in der Rangordnung erscheint und der Schritt e) das Hinzufügen einer Zellenidentität zu der aktuellen Nachbarliste umfasst.

26. Verfahren gemäß Anspruch 25, wobei die Rangordnungspositionen sechs Nachbarpositionen in einem Messprotokoll eines GSM-Systems sind und die Funktion, die sich darauf bezieht, bis zu welchem Umfang eine entsprechende andere Zellenidentität in einer vorbestimmten Position oder einem vorbestimmten Bereich von Positionen in der Rangordnung erscheint, eine Zuordnung der sechs Nachbarpositionen in drei Bereiche umfasst, die jeweils die Nachbarposition 1, die Nachbarpositionen 2 bis 3 und die Nachbarpositionen 4 bis 6 umfassen.

27. Verfahren gemäß Anspruch 10, wobei der Schritt e) ein Hinzufügen einer Zellenidentität zu der aktuellen Nachbarliste umfasst.

28. Verfahren gemäß Anspruch 27, wobei die vorbestimmten Kriterien eine Funktion einer Signalqualitätsanzeigemetrik, die in dem System eingesetzt wird, umfasst.

## Revendications

1. Procédé d'analyse d'une topologie d'un système de communication cellulaire (10), système dans lequel une ou plusieurs stations mobiles (44, 64) affectées à une cellule de desserte (16) acquièrent des données d'identité associées à des identités d'une pluralité de cellules (12, 14, 18, 20, 22) autres que ladite cellule de desserte (16) et des données de mesures de signaux associées à des mesures de signaux respectives prises par ladite cellule de desserte (16) et par ladite pluralité d'autres cellules (12, 14, 18, 20, 22), la topologie étant un agencement d'allocation de relations de transferts intercellulaires entre candidates, entre des cellules (12, 14, 16, 18, 20, 22) du système de communication cellulaire (10),
ledit système de communication cellulaire (10) comprenant une liste de voisinage actuel comprenant une identité d'une ou plusieurs cellules (12, 14, 18, 20, 22) qui sont allouées en tant que cellules candidates pour un transfert intercellulaire dans une topologie actuelle du système ;
le procédé comprenant les étapes qui consistent à :
a) collecter au moins certaines desdites données d'identité et au moins certaines desdites données de mesures de signaux pour obtenir des données collectées ;
b) déterminer, au moins en partie à partir desdites données collectées, l'identité d'une première desdites autres cellules (12, 14, 18, 20, 22);
c) comparer l'identité de ladite première desdites autres cellules (12, 14, 18, 20, 22) aux identités des cellules de la liste de voisinage actuel ; et étant **caractérisé en ce qu'**il comprend, en outre, les étapes qui consistent à:
d) comparer, en réponse à l'étape c), une première mesure de signal prise par ladite première desdites autres cellules (12, 14, 18, 20, 22) à une deuxième mesure de signal prise par ladite cellule de desserte (16) ; et
e) déterminer la topologie en réponse à l'étape d) de comparaison.

2. Procédé selon la revendication 1, dans lequel lesdites étapes a) - d) sont exécutées pour une pluralité desdites autres cellules (12, 14, 18,

3. Procédé selon la revendication 1, dans lequel lesdites étapes a) - d) sont exécutées pour une pluralité de stations mobiles (44, 64) affectées à ladite cellule de desserte (16).

4. Procédé selon la revendication 1, dans lequel ladite étape d) est exécutée pour une pluralité desdites mesures de signaux acquises au fil du temps.

5. Procédé selon la revendication 1, dans lequel une ou plusieurs des étapes a), b), c) et d) sont exécutées , selon une procédure d'échantillonnage statistique.

6. Procédé selon la revendication 5, dans lequel lesdites données d'identité et lesdites données de mesures de signaux se présentent sous la forme de modules de données, et ladite procédure d'échantillonnage statistique comprend l'échantillonnage d'une sélection desdits modules de données.

7. Procédé selon la revendication 6, dans lequel ledit système de communication cellulaire (10) est un système GSM, lesdits modules de données sont des rapports de mesures, et ladite sélection comprend la sélection de chaque nième rapport de mesure, où n est un entier.

8. Procédé selon la revendication 1, dans lequel lesdites données d'identité et lesdites données de mesures de signaux sont acquises par lesdites une ou plusieurs stations mobiles (44, 64) par balayage desdites autres cellules (12, 14, 18, 20, 22) et/ou de ladite cellule de desserte (16).

9. Procédé selon la revendication 1, dans lequel lesdites mesures de signaux sont des mesures d'intensités de signaux.

10. Procédé de modification d'une topologie d'un système de communication cellulaire (10), système dans lequel une ou plusieurs stations mobiles (44, 64) affectées à une cellule de desserte (16) acquièrent des données d'identité associées à des identités d'une pluralité de cellules (12, 14, 18, 20, 22) autres que ladite cellule de desserte (16) et des données de mesures de signaux associées à des mesures de signaux respectives prises par ladite cellule de desserte (16) et par ladite pluralité d'autres cellules (12, 14, 18, 20, 22), la topologie étant un agencement d'allocation de relations de transferts intercellulaires entre candidates, entre des cellules (12, 14. 16, 18, 20, 22) du système de communication cellulaire (10), ledit système de communication cellulaire (10) comprenant une liste de voisinage actuel comprenant une identité d'une ou plusieurs cellules (12, 14, 18, 20, 22) qui sont allouées en tant que cellules candidates pour un transfert intercellulaire dans une topologie actuelle du système de communication cellulaire (10) ;
le procédé comprenant les étapes qui consistent à :
a) collecter au moins certaines desdites données d'identité et au moins certaines desdites données de mesures de signaux pour obtenir des données collectées ;
b) déterminer, au moins en partie à partir desdites données collectées, l'identité d'une première desdites autres cellules (12, 14, 18, 20, 22) ;
c) comparer l'identité de ladite première desdites autres cellules (12, 14, 18, 20, 22) aux identités des cellules de la liste de voisinage actuel ;
le procédé étant **caractérisé en ce qu'**il comprend, en outre, les étapes qui consistent à :
d) comparer, en réponse à l'étape c), une première mesure de signal prise par ladite première desdites autres cellules (12, 14, 18, 20, 22) à une deuxième mesure de signal prise par ladite cellule de desserte (16) ; et
e) modifier la liste de voisinage actuel pour ce qui concerne ladite première desdites autres cellules (12, 14, 18, 20, 22) si le résultat de l'étape d) satisfait à un critère prédéterminé.

11. Procédé selon la revendication 10, dans lequel lesdites étapes a) - e) sont exécutées pour une pluralité desdites autres cellules (12, 14, 18, 20, 22).

12. Procédé selon la revendication 10, dans lequel lesdites étapes a) - d) sont exécutées pour une pluralité de stations mobiles (44, 64) affectées à ladite cellule de desserte.

13. Procédé selon la revendication 10, dans lequel ladite étape d) est exécutée pour une pluralité desdites mesures de signaux acquises au fil du temps.

14. Procédé selon la revendication 10, dans lequel une ou plusieurs des étapes a), b), c) et d) sont exécutées selon une procédure d'échantillonnage statistique.

15. Procédé selon la revendication 14, dans lequel lesdites données d'identité et lesdites données de mesures de signaux se présentent sous la forme de modules de données, et ladite procédure d'échantillonnage statistique comprend l'échantillonnage d'une sélection desdits modules de données.

16. Procédé selon la revendication 15, dans lequel ledit système est un système GSM, lesdits modules de données sont des rapports de mesures, et ladite sélection comprend la sélection de chaque nième rapport de mesure, où n est un entier.

17. Procédé selon la revendication 10, dans lequel lesdites données d'identité et lesdites données de mesures de signaux sont acquises par lesdites une ou plusieurs stations mobiles (44, 64) par balayage desdites autres cellules (12,14,18, 20,22) et/ou de ladite cellule de desserte (16).

18. Procédé selon la revendication 10, dans lequel ladite mesure de signal est une mesure de l'intensité du signal.

19. Procédé selon la revendication 10, dans lequel ledit système est un système GSM, et ledit critère prédéterminé comprend une fonction d'un paramètre GSM appelé RXLEV_cellule_voisine.

20. Procédé selon la revendication 10, comprenant les étapes supplémentaires qui consistent à classer les résultats de ladite étape d) dans l'ordre des différences respectives entre lesdites mesures de signaux prises par ladite première desdites autres cellules (12, 14, 18, 20, 22) et celle prise par ladite cellule de desserte (16), et à déterminer laquelle desdites différences constitue un maximum ou un minimum desdits résultats qui sont classés ; et dans lequel ladite étape e) est exécutée par l'opération qui consiste à effacer l'identité de ladite première autre cellule de la liste de voisinage actuel, et ledit critère prédéterminé comprend une fonction de ladite différence maximale ou minimale et d'un paramètre de marge de transfert intercellulaire utilisé dans ledit système.

21. Procédé selon la revendication 10, dans lequel ladite étape e) comprend l'effacement de l'identité d'une cellule de la liste de voisinage actuel.

22. Procédé selon la revendication 21, dans lequel ledit critère prédéterminé comprend une fonction d'un paramètre de marge de transfert intercellulaire utilisé dans ledit système.

23. Procédé selon la revendication 11, comprenant, en outre, une étape de tri des résultats de ladite étape d) en une pluralité d'intervalles selon les différences respectives entre les mesures de signaux prises par lesdites autres cellules (12, 14, 18, 20, 22) et celle prise par ladite cellule de desserte (16) ; et dans lequel ledit critère prédéterminé comprend une fonction se fondant sur la proportion selon laquelle lesdites différences tombent dans un intervalle donné, et ladite étape e) comprend l'ajout d'une identité de cellule à la liste de voisinage actuel.

24. Procédé selon la revendication 23, dans lequel lesdits intervalles comprennent une correspondance avec un paramètre de marge de transfert intercellulaire utilisé dans ledit système de communication cellulaire (10).

25. Procédé selon la revendication 11, dans lequel les identités d'une pluralité desdites autres cellules (12, 14, 18, 20, 22) sont classées de manière répétitive à des positions de classement, selon un ordre de classement établi en fonction desdites mesures de signaux, ledit critère prédéterminé comprend une fonction associée à la mesure selon laquelle l'identité d'une autre cellule respective apparaît à une position prédéterminée ou dans un intervalle de positions dans ledit ordre de classement, et ladite étape e) comprend l'ajout de l'identité d'une cellule à la liste de voisinage actuel.

26. Procédé selon la revendication 25, dans lequel lesdites positions de classement sont six positions de voisinage dans un rapport de mesures d'un système GSM, et ladite fonction associée à la mesure selon laquelle l'identité d'une autre cellule respective apparaît à une position prédéterminée ou dans un intervalle de positions dans ledit ordre de classement comprend l'allocation desdites six positions de voisinage dans trois intervalles constitués, respectivement, de la position de voisinage 1, des positions de voisinage 2 à 3, et des positions de voisinage 4 à 6.

27. Procédé selon la revendication 10, dans lequel ladite étape e) comprend l'ajout de l'identité d'une cellule à la liste de voisinage actuel.

28. Procédé selon la revendication 27, dans lequel ledit critère prédéterminé comprend une fonction d'une mesure indicatrice de la qualité du signal, utilisée dans ledit système.
